# EUROPÄISCHE PATENTSCHRIFT

(11) **EP 0 853 834 B1**
(45) Veröffentlichungstag und Bekanntmachung des Hinweises auf die Patenterteilung: **15.09.2004**
(21) Anmeldenummer: 96931720.5
(22) Anmeldetag: 04.10.1996
(51) Int. Cl.: H02G 1/08

(54) **EINRICHTUNG ZUM EINZIEHEN EINES ELEKTROKABELS FÜR HAUSINSTALLATIONEN**
PULLING ARRANGEMENT FOR A DOMESTIC ELECTRIC CABLE
SYSTEME POUR TIRER UN CABLE ELECTRIQUE POUR INSTALLATIONS DOMESTIQUES

(30) Priorität: 06.10.1995 CH 282895
(43) Veröffentlichungstag der Anmeldung: 22.07.1998
(73) Patentinhaber: Hug, Hanspeter, 3653 Oberhofen (CH)
(72) Erfinder: Hug, Hanspeter, 3653 Oberhofen (CH)
(74) Vertreter: BOVARD AG - Patentanwälte
(86) Internationale Anmeldenummer: PCT/CH1996/000352
(87) Internationale Veröffentlichungsnummer: WO 1997/014203

(56) Entgegenhaltungen:
- EP-A- 0 445 312
- EP-A- 0 493 851
- WO-A-95/11540
- DE-A- 1 590 280
- FR-A- 2 537 795

## Beschreibung

Die vorliegende Erfindung betrifft eine Einrichtung zum Einziehen eines Elektrokabels für Hausinstallationen gemäss dem Oberbegriff des Patentanspruches 1.

Derartige Einrichtungen sind bekannt. So zeigt beispielsweise die EP-A-0 445 312 eine Vorrichtung zum Verlegen von Kabeln. Hierzu ist eine Spannvorrichtung vorgesehen, mittels welcher eine Führungshülse für das Ende des Führungsschlauches im Bereich des Eingangs des Kabelschutzrohres, in welche ein Kabel zu verlegen ist. Die Spannvorrichtung wird hierzu in einem Schacht zwischen den Wänden eingespannt. Für Hausinstallationen ist diese Vorrichtung nicht geeignet, da üblicherweise die Räumlichkeiten eine Spannvorrichtung erfordern würden, die grosse Abmessungen aufweist und somit unhandlich wäre.

Der Gegenstand der zum Stande der Technik gehörenden Druckschrift EP-A-0 445 312 weist somit keine Vorrichtung zum Führen des Zugorganes im Bereich einer Maueröffnung mit Halteelementen auf, die in den verschiedenen Maueröffnungen für Hausinstallationen, beispielsweise bei Steckdosen oder Schaltern lösbar festgeklemmt werden könnte.

Es ist deshalb Aufgabe der vorliegenden Erfindung, die Nachteile des Standes der Technik zu vermeiden und eine eingangs erwähnte Einrichtung derart auszubilden, dass die Vorrichtung zum Führen des Zugorganes im Bereich einer Maueröffnung mit Halteelementen in den oben erwähnten Maueröffnungen bei Hausinstallationen lösbar festgeklemmt werden kann.

Dies wird erfindungsgemäss bei der Einrichtung gemäss Patentanspruch 1 dadurch erzielt, dass die Halteelemente als Greiferarme ausgebildet sind, welche erste und zweite gelenkig miteinander verbundene Armteile umfassen, wobei die äusseren Enden der zweiten Armteile als Zacken ausgebildet sind.

Bevorzugte Ausführungsformen ergeben sich aus den abhängigen Ansprüchen.

Im folgenden werden anhand der beiliegenden Zeichnung Ausführungsbeispiele der Erfindung sowie deren Verwendung näher beschrieben. Es zeigen
Fig. 1 eine perspektivische Gesamtansicht der Einrichtung zum Einziehen eines Elektrokabels für Hausinstallationen,
Fig. 2 eine Seitenansicht der Vorrichtung zum Ziehen und zum Stossen einer Saite,
Fig. 3 eine Draufsicht auf die Vorrichtung gemäss Fig. 2,
Fig. 4 eine Vorderansicht der Vorrichtung gemäss Fig. 2,
Fig. 5 eine perspektivische Darstellung der Vorrichtung gemäss Fig. 2,
Fig. 6 eine perspektivische Darstellung der Führungs- und Haltevorrichtung für die Saite im Bereich einer Maueröffnung,
Fig. 7 einen Längsschnitt durch ein zweites Ausführungsbeispiel der Führungs- und Haltevorrichtung für die Saite im Bereich einer Maueröffnung,
Fig. 8 eine Draufsicht gemäss Pfeil A auf die Vorrichtung gemäss Fig. 7,
Fig. 9 eine Vorderansicht gemäss Pfeil B der Vorrichtung gemäss Fig. 7.

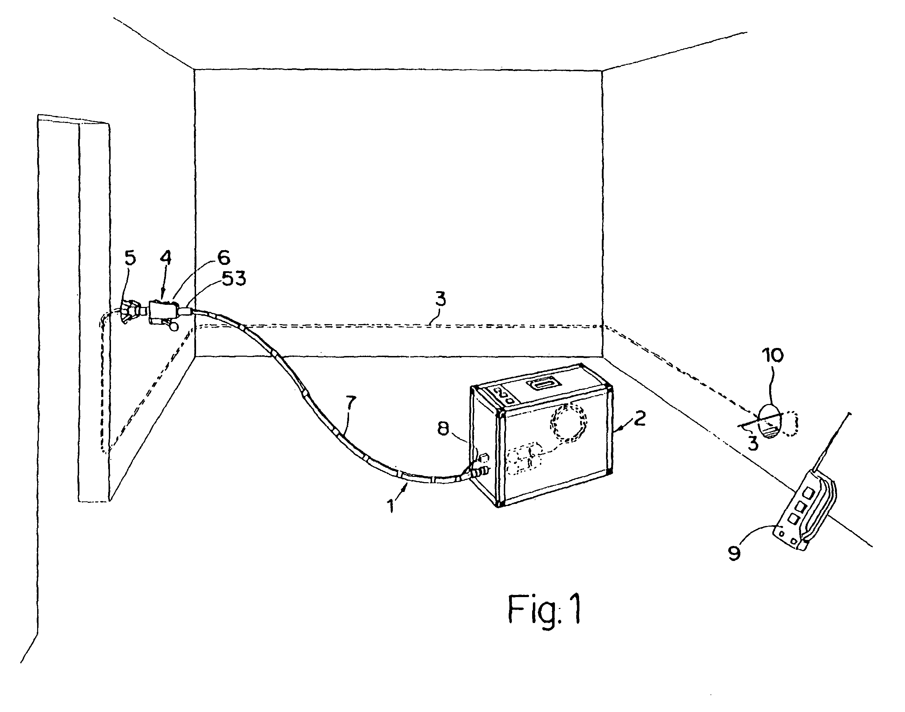

In Fig. 1 ist die Einrichtung 1 zum Einziehen eines Elektrokabels für Hausinstallationen perspektivisch dargestellt. Sie umfasst eine erste Vorrichtung 2 zum Ziehen und zum Stossen einer Saite 3 in einem im Mauerwerk verlegten Kabelrohr sowie eine zweite Vorrichtung 4, welche in einer Öffnung 5 im Mauerwerk lösbar befestigt wird und die Saite resp. das Elektrokabel in diesem Bereich führt, wobei diese Vorrichtung 4 mit einer Steuereinheit 6 versehen ist. Die Vorrichtung 2 ist einsetzbar in Maueröffnungen zwischen 4 und 10 cm Grösse und lässt sich in diesem Bereich beliebig ansetzen und in der Öffnung festklemmen. Die Vorrichtung 2 und die Vorrichtung 4 sind durch einen Schlauch 7 miteinander verbunden. Der Schlauch 7 kann mit Teflon beschichtet sein. Im weiteren ist die Steuereinheit 6 mit einem Kabel 8 mit der Vorrichtung 2 verbunden. Die Steuerung der Vorrichtung 2 erfolgt entweder direkt an dieser Vorrichtung 2, über die Steuereinheit 6 an der Vorrichtung 4 oder durch ein Funkgerät 9. Bei der Maueröffnung 10, bei welcher die mit der Vorrichtung 2 durch das Kabelrohr in der die Wand hindurchgestossene Saite wieder hervortritt, kann das in Fig. 1 nicht dargestellte Elektrokabel an der Saite befestigt werden, worauf diese durch die Vorrichtung 2 aufgehaspelt wird. Die Saite wird beim Abhaspeln durch den flexiblen Verbindungsschlauch 7 und ein Rohr 53 in der Vorrichtung 4 zum Führen der Saite in und durch das im Mauerwerk vorgesehene Kabelrohr gestossen und zwar auf eine Distanz von mindestens 20 m und mit mindestens 50 kp Stosskraft. Die Zugkraft beim Zurückziehen der Saite mit dem Elektrokabel oder den Elektrokabeln beträgt ebenfalls mindestens 50 kp. Automatische Notschaltungen verhindern Fehlfunktionen. Die ganze Einrichtung ist mobil einsetzbar und die erste Vorrichtung 2 wird in einem Koffer transportiert. Wenn das Einziehen der Saite resp des Elektrokabels nur durch eine Bedienungsperson ausgeführt werden soll, so wird sich diese Person bei der Maueröffnung, an welcher das Elektrokabel angehängt wird, aufhalten und mit dem Funkgerät 9 die Vorrichtung 2 zum Ziehen und Stossen steuern. Die Saite ist von der ersten Vorrichtung 2 bis zur Maueröffnung 5 und nachher im Kabelrohr geführt.

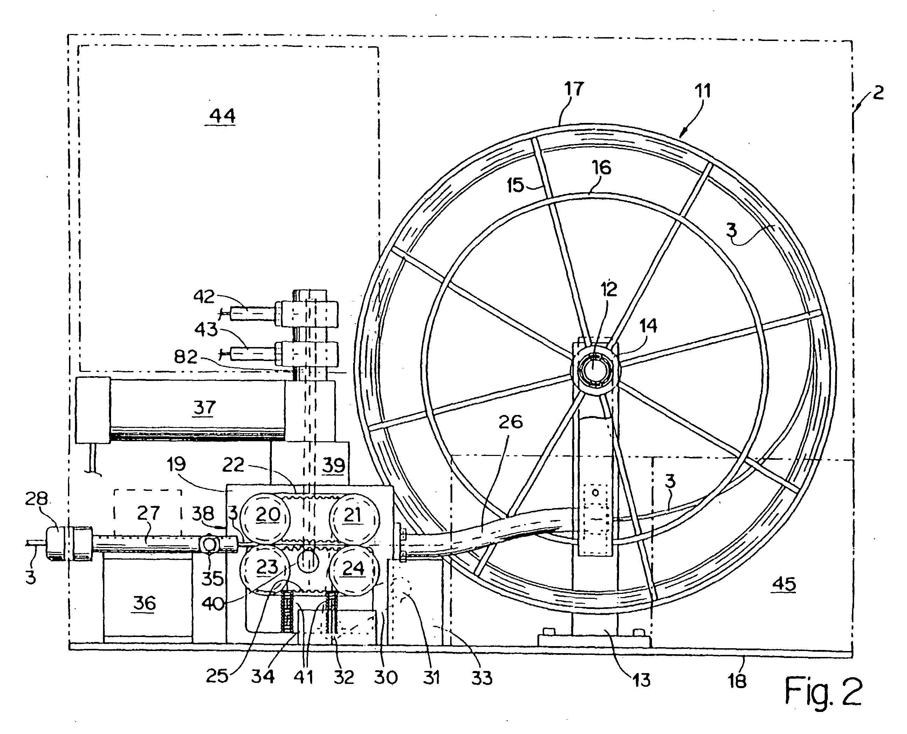

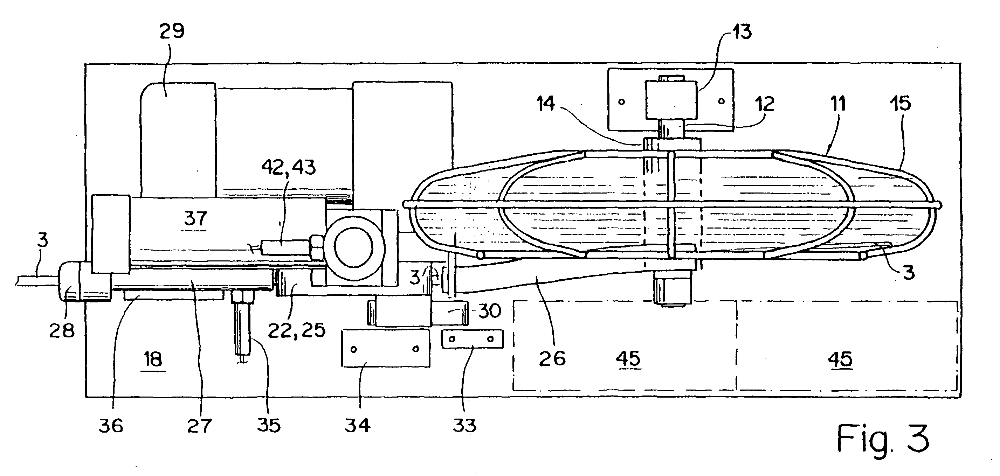

In Fig. 2 ist eine Seitenansicht der Vorrichtung 2 zum Ziehen und Stossen einer Saite 3 und in Fig. 3 eine Draufsicht auf die Vorrichtung dargestellt. Eine Haspel 11 ist mit einer Achse 12 an einem Ständer 13 befestigt. An einer Nabe 14 sind Bügel 15 befestigt. Die Enden derselben sind auf der einen Seite durch einen Rundstab 16 verbunden. Die Bügel 15 sind an ihren äusseren Enden ebenfalls durch einen Rundstab 17 verbunden. Der Ständer 13 ist auf einer Grundplatte 18 montiert. Die aufgewickelte Saite liegt im Aussenbereich der Bügel 15 an. Beim Aufhaspeln der Saite wird sie auf dem Haspel durch ihre natürliche Federspannung zwangsaufgerollt. Auf einem Halteblock 19 ist das Transportmittel angeordnet. Es besteht aus zwei oberen Zahnriemenscheiben 20 und 21, die über einen Zahnriemen 22 verbunden sind sowie aus zwei unteren Zahnriemenscheiben 22 und 24 die ebenfalls über einen Zahnriemen 25 verbunden sind. Die Zahnriemen 22 und 25 sind aussen mit Gummi beschichtet. Zwischen den beiden Zahnriemen wird die Saite geführt und entweder ausgestossen oder eingerollt. Ein Führungsrohr 26 führt vom Inneren der Haspel zu den beiden Zahnriemenscheiben 21 und 24. Ein weiteres Führungsrohr 27 führt von den Zahnriemenscheiben 20 und 23 zu einem Anschlussstutzen 28. Aus Fig. 3 ist ein Getriebemotor 29 ersichtlich, der die Zahnriemenscheibe 21 antreibt. Ein weiterer, doppelseitiger Zahnriemen 30 ist um Zahnriemenscheiben 46, 47 und zwei weitere Zahnriemenscheiben 31 und 32 geschlungen und treibt auch die untere Zahnriemenscheibe 24 an. Die Zahnriemenscheibe 31 ist auf einem Block 33 und die Zahnriemenscheibe 32 auf einem Block 34 gelagert. Am Rohr 27 ist ein Endschalter 35 angeordnet, der verhindert, dass die Saite ganz hineingezogen wird, wobei am Ende der Saite eine entsprechende Markierung angebracht ist. Der Schalter ist vorzugsweise als berührungsloser induktiver Schalter ausgebildet. Das Rohr 27 ist auf einem Halteblock 36 montiert. Ein Spindelhubgetriebe 37 zum Spannen der Saitentransportvorrichtung 38 ist mit einem Block 39 auf dem Halteblock 19 montiert. Die vertikal bewegbare Spindel 82 drückt die auf eine Platte 40 montierten Zahnriemenscheiben 23 und 24 mit dem Zahnriemen 25 gegen den Druck von Federn 41 nach unten, wodurch die Saite 3 nicht mehr zwischen den Zahnriemen 22 und 25 eingeklemmt ist. Die Bewegung der Spindel wird durch die berührungslosen induktiven Endschalter 42 und 43 erfasst. Die Anschlüsse des Motors 29 des Spindelhubgetriebes 37 und der Endschalter 35, 42 und 43 sind mit der nur schematisch dargestellten elektrischen Steuerung 44 verbunden. Der Antrieb der Vorrichtung 2 folgt durch in dieser selbst angeordnete Akkumulatoren.

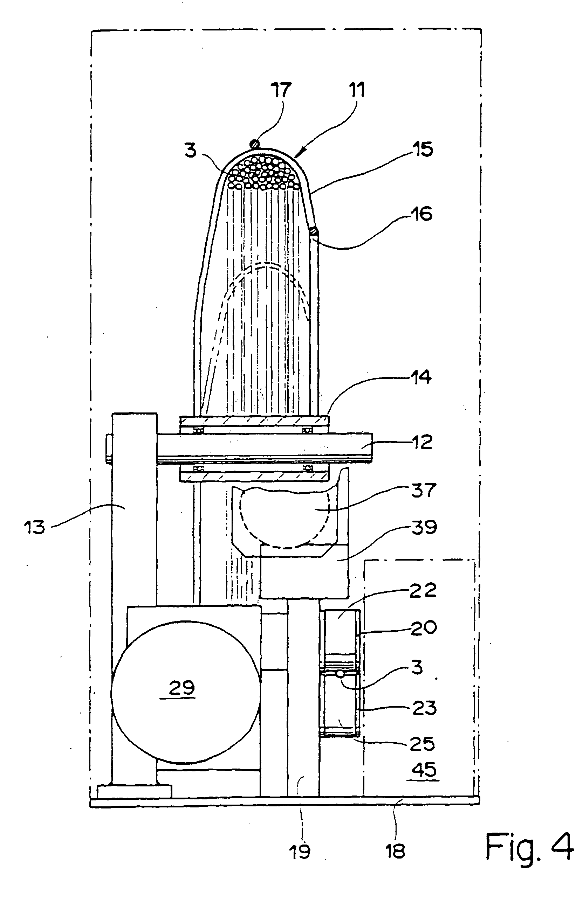

Fig. 4 zeigt eine Vorderansicht der Vorrichtung zum Ziehen und zum Stossen einer Saite.

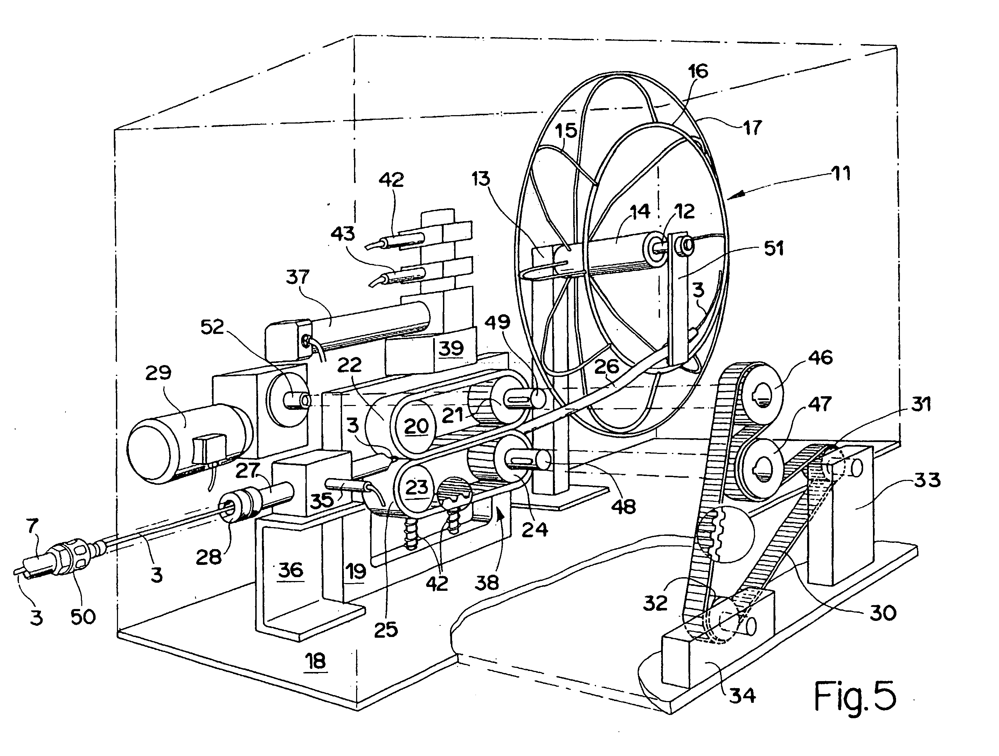

Fig. 5 zeigt eine perspektivische Darstellung der Vorrichtung gemäss den Figuren 2 bis 4.

Aus dieser Figur ist ersichtlich, dass die beiden Zahnriemenscheiben 46 und 47 mittels an den Zahnriemenscheiben 21 und 24.zentrisch angebrachten Stiften 48 und 49 auf die Zahnriemenscheiben 21 und 24 aufsteckbar sind. Der Verbindungsschlauch 7 ist mittels eines Endstückes 50 auf den Anschlussstutzen 28 aufsetzbar. Das Rohr 26 ist mit einem Haltebalken 51 an der Achse 12 der Haspel 11 befestigt. Aus dieser Figur ist noch die Antriebswelle 52 zum Antrieb der Zahnriemenscheibe 21 ersichtlich.

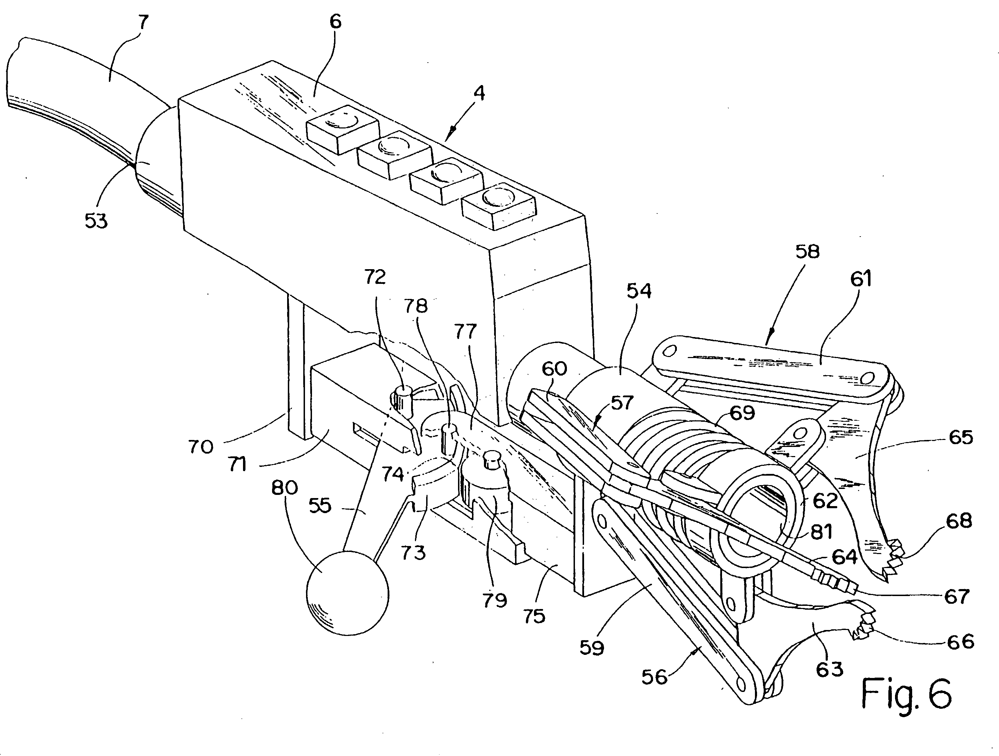

Fig. 6 zeigt in perspektivischer Ansicht die Vorrichtung 4 zum Führen der Saite im Bereich einer Maueröffnung. An einem Führungsrohr 53 ist die Steuerung 6 befestigt. Auf dem vorderen Teil des Rohres 53 ist ein erster rohrförmiger Teil 54 aufgesetzt, der auf dem Rohr 53 durch die Einwirkung eines Hebels 55 hin- und herbewegbar ist. An diesem rohrförmigen Teil 54 sind drei Greiferarme 56, 57 und 58 gelenkig befestigt. Die Greiferarme sind zweiteilig ausgebildet und umfassen je einen mit einem Ansatz am Rohrteil 54 verbundenen ersten Armteil 59, 60 und 61 sowie je einen mit einem Ansatz an einem zweiten rohrförmigen Teil 62 verbundenen zweiten Armteil 63, 64 und 65. Die Armteile 63, 64 und 65 sind an ihren äusseren Enden mit Zacken 66, 67 und 68 versehen, die in die Maueröffnung 5 gemäss Fig. 1 eingreifen. Die ersten und zweiten Armteile sind gelenkig miteinander verbunden. Zwischen den beiden rohrförmigen Teilen 54 und 62 ist eine Feder 69 angeordnet. An einem Ansatz 70 des Rohres 53 ist ein parallel zum Rohr 53 verlaufender, im Querschnitt rechteckförmiger Führungsteil 71 befestigt. In diesem Führungsteil ist der Betätigungshebel 55 mit von diesem nach unten und oben abstehenden Bolzen 72 drehbar gelagert. Der Hebel ist mit einem kurvenförmigen Teil 73 versehen. Der kurvenförmige Teil 73 weist einen Knick 74 auf Mit dem rohrförmigen Teil 54 ist ein parallel zum Rohr 53 angeordneter, im Querschnitt rechteckförmiger Ansatz 75 verbunden. Dieser weist einen gabelförmigen Teil 77 auf, an welchem an dessen vorderen Ende ein Bolzen 78 angeordnet ist, der hinter den kurvenförmigen Teil 73 des Hebels 55 greift. Zwischen der Kurve 73 und dem Ansatz 75 ist eine Zahnrolle 79 angeordnet. Zum Befestigen der Vorrichtung 4 wird diese in der in Fig. 6 gezeigten Position mit den vorderen Greiferarmteilen in eine Maueröffnung gebracht, in welcher später eine Steckdose oder ein Schalter montiert wird, worauf der Hebel 55 an seinem Griff 80 von den Greiferarmen weggeklappt wird, wodurch sich diese im Bereich der Zacken 66, 67 und 68 spreizen und die Vorrichtung 4 zum Führen der Saite 3 in der Maueröffnung 5 halten. Anschliessend wird der Schlauch 7 auf das Rohr 53 aufgesetzt. Der vordere Teil 81 des Rohres 53 kommt in die Nähe des Endes des Kabelrohres in der Maueröffnung zu liegen.

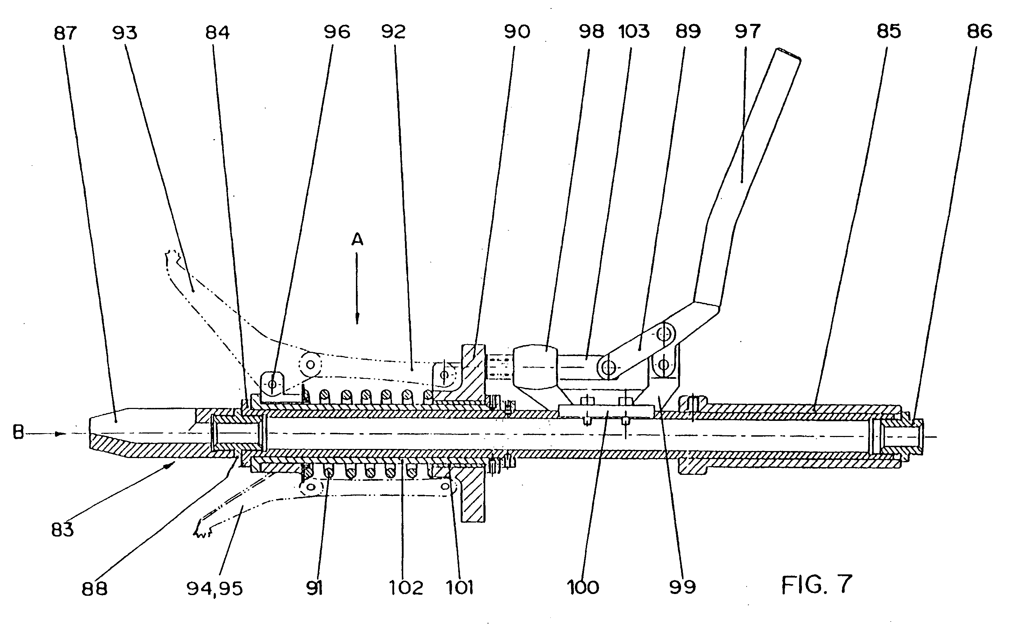

Fig. 7 zeigt einen Schnitt durch ein weiteres Ausführungsbeispiel einer Vorrichtung 83 zum Führen der Saite im Bereich der Maueröffnung. Ein Rohr 84 ist an seinem hinteren Ende mit einem Handgriff 85 versehen. Hinten auf dem Rohr ist ein Adapter 86 zum Aufstecken des Schlauches 7 aufgesetzt. Vorne auf dem Rohr ist eine Leitschaufel 87 mit einem Adapter 88 aufgesetzt. Mit einem Schubstangen-Spanner 89 wird ein Schieber 90 gegen den Druck einer Druckfeder 91 mit einer Schubstange 103 auf dem Rohr verschoben, wobei über Verbindungslaschen 92 die drei Greiferarme 93, 94 und 95 um die Drehpunkte 96 verdreht werden. Der Schubstangen-Spanner 89 wird über einen Verlängerungshebel 97 betätigt. Der Schubstangen-Spanner 89 ist über einer Halterung 98, 99 durch eine Befestigungsplatte 100 mit dem Rohr 84 verbunden. Der Schieber 90 ist über ein Gleitlager 101 auf einer Hülse 102 gegen den Druck der Feder 91 bewegbar. Durch das Rohr 84 wird die in dieser Figur nicht dargestellte Saite geführt. Die Greiferarme 93, 94, 95 sind mit der Hülse 102 um das Rohr 84 drehbar.

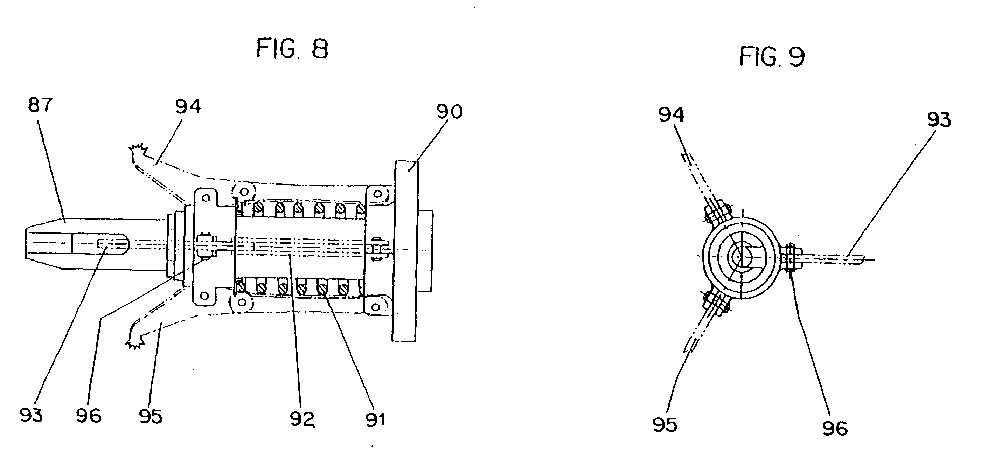

Fig. 8 zeigt den vorderen Teil der Vorrichtung zum Führen der Saite gemäss Pfeil A der Fig. 7. Aus dieser Figur ist ersichtlich, dass der Greiferarm 93 länger ausgebildet ist als die beiden anderen Greiferarme 94 und 95, die gleich lang sind. Dadurch wird ermöglicht, dass die Vorrichtung zum Führen der Saite etwa in einem Winkel von 45° zur Maueröffnung angeordnet werden kann.

Fig. 9 zeigt eine Draufsicht auf die Vorrichtung zum Führen der Saite gemäss Pfeil B der Fig. 1.

Es wäre auch möglich, zur Installation der Elektrokabel lediglich die erste Vorrichtung 2 zum Ziehen und Stossen einer Saite 3 in einem im Mauerwerk verlegten Kabelrohr ohne die zweite Vorrichtung 4, welche in einer Öffnung 5 im Mauerwerk lösbar befestigt wird, zu verwenden. In diesem Falle würde ein Rohr auf den Schlauch 7 gesteckt, welches Rohr in der Öffnung im Mauerwerk gehalten wird.

## Patentansprüche

1. Einrichtung zum Einziehen eines Elektrokabels für Hausinstallationen, mit einer ersten Vorrichtung (2) zum Ziehen und zum Stossen eines Zugorganes (3) mit einer Haspel (11) zum Aufhaspeln des Zugorganes (3) und einem Transportmittel (38) für das Zugorgan (3), einem Antriebsmittel (29) für das Transportmittel (38), einem ersten Führungsmittel (26, 27) für das Zugorgan (3) und eine zweite Vorrichtung (4) zum Führen des Zugorganes (3) im Bereich einer Maueröffnung (5) mit Halteelementen (63, 64, 65), einem zweiten Führungsmittel (53) für das Zugorgan (3) und einem Betätigungsorgan (55) zum Betätigen der Halteelemente, wobei das erste (26, 27) und das zweite Führungsmittel (53) durch ein drittes Führungsmittel (7) verbunden sind und an der Einrichtung selbst und/oder extern angeordnete Steuermittel (6, 9) zur Steuerung des Zugorganes vorgesehen sind, **dadurch gekennzeichnet, dass** die Halteelemente als Greiferarme (56, 57, 58) ausgebildet sind, welche erste (59, 60, 61) und zweite (63, 64, 65) gelenkig miteinander verbundene Armteile umfassen, wobei die äusseren Enden der zweiten Armteile als Zacken (66, 67, 68) ausgebildet sind.

2. Einrichtung nach Patentanspruch 1, **dadurch gekennzeichnet, dass** das Zugorgan als Kunststoff- oder Metallsaite (3) ausgebildet ist.

3. Einrichtung nach Patentanspruch 1, **dadurch gekennzeichnet, dass** ein erster Greiferarm (93) länger ausgebildet ist als ein zweiter und dritter Greiferarm (94, 95).

4. Einrichtung nach Patentanspruch 1, **dadurch gekennzeichnet, dass** das erste Führungsmittel ein erstes von der Haspel (11) zum Transportmittel (38) reichendes Rohr (26) und ein zweites, vom Transportmittel nach aussen reichendes, einen Anschlussstutzen (28) für das dritte Führungsmittel (7) aufweisendes Rohr (27) umfasst.

5. Einrichtung nach Patentanspruch 2, **gekennzeichnet durch** einen ersten Endschalter (35) zur Vermeidung des Einzugs der Saite (3).

## Claims

1. Installation for putting in electrical cable for indoor installations, with a first device (2) for pulling and pushing a pulling element (3) with a reel (11) for winding the pulling element (3) and with a transport means (38) for the pulling element (3), a drive means (29) for the transport means (38), a first guide means (26, 27) for the pulling element (3), and a second device (4) for guiding the pulling element (3) in the area of a wall opening (5), with holding elements (63, 64, 65), with a second guide means (53) for the pulling element (3) and an actuation element (55) for actuation of the holding elements, the first (26, 27) and the second guide means (53) being connected through a third guide means (7), and control means (6, 9) being provided, disposed on the installation itself and/or disposed externally, for controlling the pulling element, **characterised in that** the holding elements are designed as grasping arms (56, 57, 58) comprising first (59, 60, 61) and second (63, 64, 65) arm parts, connected together in an articulated way, the outer ends of the second arm parts being designed as teeth (66, 67, 68).

2. Installation according to claim 1, **characterised in that** the pulling element is formed by a plastic or metal string (3).

3. Installation according to claim 1, **characterised in that** a first grasping arm (93) is designed longer than a second and third grasping arm (94, 95).

4. Installation according to claim 1, **characterised in that** the first guide means comprises a first pipe (26), extending from the reel (11) to the transport means (38), and a second pipe (27), extending from the transport means toward the outside and having a connection piece (28) for the third guide means (7).

5. Installation according to claim 2, **characterised by** a first limit switch (35) to prevent the pulling in of the string (3).

## Revendications

1. Dispositif pour tirer un câble électrique pour des installations domestiques avec un premier dispositif (2) pour le tirage et la poussée d'un organe de traction (3) avec un treuil (11) pour enrouler l'organe de traction (3) et d'un organe de transport (38) pour l'organe de traction (3), un moyen d'entraînement (29) pour le moyen de transport (38), un premier moyen de guidage (26, 27) pour l'organe de traction (3) et un second dispositif (4) pour le guidage de l'organe de traction (3) dans la zone d'ouverture murale (5) avec des éléments de retenue (63, 64, 65), un second moyen de guidage (53) pour l'organe de traction (3) et un organe d'actionnement (55) pour l'actionnement des éléments de retenue, le premier (26, 27) et le second moyen de guidage (53) étant reliés par un troisième moyen de guidage (7) et des moyens de commande (6, 9) disposés sur le dispositif même ou en externe étant prévus pour la commande de l'organe de traction, **caractérisé en ce que** les éléments de retenue sont réalisés comme des arbres de préhension (56, 57, 58) qui comprennent des premières parties de bras (59, 60, 61) et des secondes parties de bras (63, 64, 65) reliées entre elles de manière articulée, les extrémités externes des secondes parties de bras étant réalisées comme des dents (66, 67, 68).

2. Dispositif selon la revendication 1, **caractérisé en ce que** l'organe de traction est réalisé comme des cordes métalliques ou en matière plastique (3).

3. Dispositif selon la revendication 1, **caractérisé en ce qu'**un premier arbre de préhension (93) est plus long qu'un second et un troisième bras de préhension (94, 95).

4. Dispositif selon la revendication 1, **caractérisé en ce que** le premier moyen de guidage comprend un premier tube (26) allant du treuil (11) au moyen de transport (38) et un second tube (27) présentant une tubulure de raccordement (28) partant du moyen de transport et allant vers l'extérieur pour le troisième moyen de guidage (7).

5. Dispositif selon la revendication 2, **caractérisé par** un interrupteur de fin de course (35) pour éviter la rentrée de la corde (3).
